# EUROPEAN PATENT APPLICATION

(11) **EP 4 080 479 A2**
(43) Date of publication of application: **26.10.2022**
(21) Application number: 22179595.8
(22) Date of filing: 17.06.2022
(51) Int. Cl.: G08G 1/00

(54) **METHOD FOR IDENTIFYING TRAFFIC LIGHT, DEVICE, CLOUD CONTROL PLATFORM AND VEHICLE-ROAD COORDINATION SYSTEM**

(30) Priority: 17.06.2021 CN 202110675157
(71) Applicant: Apollo Intelligent Connectivity (Beijing) Technology Co., Ltd., Beijing 100176 (CN)
(72) Inventor: Liu, Bo, Beijing, 100176 (CN)
(74) Representative: Hoffmann Eitle

(57) **Abstract**

A method and an apparatus for identifying a traffic light, an electronic device, a storage medium, a program product, a roadside device, a cloud control platform and a vehicle-road coordination system are provided, which are relate to fields of autonomous driving, image processing, etc. The method for identifying a traffic light includes: identifying a first position information of the traffic light in an image to be identified; determining a target position information from at least one second position information based on a relative position relationship between the first position information and the at least one second position information, in response to the first position information indicating a position of a part of the traffic light, wherein the second position information indicates a position of the traffic light; and identifying a color of the traffic light in a first image area corresponding to the target position information in the image to be identified.

## Description

### TECHNICAL FIELD

The present disclosure relates to a field of intelligent transportation, in particular to fields of autonomous driving, image processing, etc., and specifically to a method and an apparatus for identifying a traffic light, an electronic device, a storage medium, a program product, a roadside device, a cloud control platform and a vehicle-road coordination system.

### BACKGROUND

**In** a field of transportation, it is often desired to identify a color of a traffic light so that vehicles may drive or stop according to the color of the traffic light. Especially in fields of autonomous driving and intelligent transportation, it is usually desired to automatically identify the color of the traffic light, so that autonomous vehicles may perform relevant operations according to the identified color. However, in the related art, the identification effect in identifying the color of the traffic light is poor due to environmental interference and the accuracy of the identification algorithm itself, resulting in potential safety hazards during vehicle driving.

### SUMMARY

The present disclosure provides a method and an apparatus for identifying a traffic light, an electronic device, a storage medium, a program product, a roadside device, a cloud control platform and a vehicle-road coordination system.

According to one aspect of the present disclosure, a method for identifying a traffic light is provided, including: identifying a first position information of the traffic light in an image to be identified; determining a target position information from at least one second position information based on a relative position relationship between the first position information and the at least one second position information, in response to the first position information indicating a position of a part of the traffic light, wherein the second position information indicates a position of the traffic light; and identifying a color of the traffic light in a first image area corresponding to the target position information in the image to be identified.

According to another aspect of the present disclosure, an apparatus for identifying a traffic light is provided, including: a first identifying module configured to identify a first position information of the traffic light in an image to be identified; a first determining module configured to determine a target position information from at least one second position information based on a relative position relationship between the first position information and the at least one second position information, in response to the first position information indicating a position of a part of the traffic light, wherein the second position information indicates a position of the traffic light; and a second identifying module configured to identify a color of the traffic light in a first image area corresponding to the target position information in the image to be identified.

According to another aspect of the present disclosure, an electronic device is provided, including: at least one processor; and a memory communicatively connected with the at least one processor; wherein the memory stores instructions executable by the at least one processor, and the instructions, when executed by the at least one processor, cause the at least one processor to perform the above-mentioned method for identifying a traffic light.

According to another aspect of the present disclosure, a non-transitory computer-readable storage medium storing computer instructions is provided, wherein the computer instructions are configured to cause the computer to perform the above-mentioned method for identifying a traffic light.

According to another aspect of the present disclosure, a computer program product including a computer program is provided, wherein the computer program, when executed by a processor, implements the above-mentioned method for identifying a traffic light.

According to another aspect of the present disclosure, a roadside device is provided, including the above-mentioned electronic device.

According to another aspect of the present disclosure, a cloud control platform is provided, including the above-mentioned electronic device.

According to another aspect of the present disclosure, a vehicle-road coordination system is provided, including the above-mentioned roadside device and an autonomous vehicle, wherein, the roadside device is configured to send the color of the traffic light to the autonomous vehicle; and the autonomous vehicle is configured to drive automatically according to the color of the traffic light.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used for better understanding of the present solution, and do not constitute a limitation to the present disclosure. Wherein:
FIG. 1 schematically shows an application scene of a method and an apparatus for identifying a traffic light according to an embodiment of the present disclosure;
FIG. 2 schematically shows a flowchart of a method for identifying a traffic light according to an embodiment of the present disclosure;
FIG. 3 schematically shows a schematic diagram of a method for identifying a traffic light according to an embodiment of the present disclosure;
FIG. 4 schematically shows a schematic diagram of a method for identifying a traffic light according to another embodiment of the present disclosure;
FIG. 5 schematically shows a block diagram of an apparatus for identifying a traffic light according to an embodiment of the present disclosure; and
FIG. 6 is a block diagram of an electronic device for identifying a traffic light used to implement the embodiments of the present disclosure.

### DETAILED DESCRIPTION OF EMBODIMENTS

Hereinafter, the embodiments of the present disclosure will be described with reference to the drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The terms used herein are for the purpose of describing specific embodiments only and are not intended to limit the present disclosure. The terms "comprising", "including", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

**In** the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C). **In** the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

The embodiments of the present disclosure provide a method for identifying a traffic light. The method for identifying a traffic light includes: identifying a first position information of the traffic light in an image to be identified; determining a target position information from at least one second position information based on a relative position relationship between the first position information and the at least one second position information, in response to the first position information indicating a position of a part of the traffic light, wherein the second position information indicates a position of the traffic light; and identifying a color of the traffic light in a first image area corresponding to the target position information in the image to be identified.

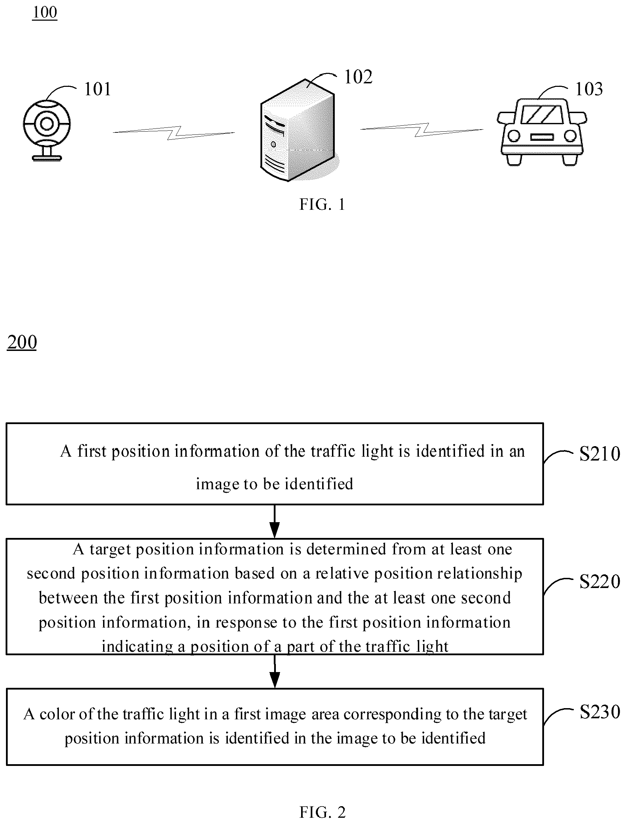

FIG. 1 schematically shows an application scene of a method and an apparatus for identifying a traffic light according to an embodiment of the present disclosure. It should be noted that FIG. 1 is only an example of an application scene to which the embodiments of the present disclosure may be applied, so as to help those skilled in the art to understand the technical content of the present disclosure, but it does not mean that the embodiments of the present disclosure may not be used in other devices, systems, environments or scenes.

As shown in FIG. 1, an application scene 100 according to this embodiment may include an image capture apparatus 101, a server 102 and a vehicle 103.

The image capture apparatus 101 may include a camera. The image capture apparatus 101 may be fixed at a certain position, such as a monitoring light pole or a street light pole at an intersection. The image capture apparatus 101 is used to collect an image of a traffic light. After the image of the traffic light is collected, the image may be sent to the server 102 for processing. When an autonomous vehicle is driving, the traffic light in front of the autonomous vehicle may be blocked by a large vehicle and thus fails to be identified. A roadside device such as a roadside camera and a roadside monitor has a better field of vision to identify the color of the light, and the color of the light is sent to the autonomous vehicle, which may assist the autonomous vehicle to safely pass through the intersection, and achieve vehicle-road coordination.

The server 102 may be a server that provides various services. After receiving the image, the server 102 may identify the color of the traffic light in the image. The color of the traffic light includes, for example, red, yellow, green, and the like.

After the color of the traffic light is identified by the server 102, an identification result may be sent to the vehicle 103. The vehicle 103 may be an autonomous vehicle. After receiving the identification result, the vehicle 103 may drive or stop according to the identification result. For example, when the identification result indicates that the traffic light is green, the vehicle 103 may continue to drive. If the identification result indicates that the traffic light is red or yellow, the vehicle 103 may stop and wait.

It should be noted that the method for identifying the traffic light provided by the embodiments of the present disclosure may be performed by the server 102. Correspondingly, the apparatus for identifying the traffic light provided by the embodiments of the present disclosure may be set in the server 102.

In another example, in a case that the image capture apparatus 101 has an image processing function, the method for identifying the traffic light of the embodiments of the present disclosure may be performed by the image capture apparatus 101, so as to identify the color of the traffic light, and send the identification result to the vehicle 103.

In another example, in a case that the vehicle 103 has an image processing function, the method for identifying the traffic light of the embodiments of the present disclosure may be performed by the vehicle 103, so as to identify the color of the traffic light. For example, after the vehicle 103 receives the image from the image capture apparatus 101, the image may be processed to obtain the color of the traffic light.

Exemplarily, the server 102 may include an electronic device having a processor and a memory, the processor is communicatively connected with the memory. The memory stores instructions executable by the processor, and when the instructions are executed by the processor, the method for identifying the traffic light of the embodiments of the present disclosure may be implemented.

Exemplarily, the embodiments of the present disclosure further provide a roadside device and a cloud control platform. The roadside device may include the electronic device. It is also possible for the cloud control platform to include the electronic device.

Optionally, the roadside device may include a communication component and the like in addition to electronic device. The electronic device may be integrated with the communication component, or may be set separately. The electronic device may obtain data such as pictures and videos from a sensing device (such as roadside camera), so as to perform image and video processing and data calculating. Optionally, the electronic device itself may have a function of acquiring sense data and a communication function. For example the electronic device may be an AI camera. The electronic device may process image and video and perform data calculation based on the acquired sensing data directly.

Optionally, the cloud control platform performs processing in the cloud, and the electronic device included in the cloud control platform may obtain data such as pictures and videos from a sensing device (such as roadside camera), so as to process image and video and perform data calculation. The cloud control platform may also be referred as a vehicle-road coordination management platform, an edge computing platform, a cloud computing platform, a central system, a cloud server, and the like.

Exemplarily, the embodiments of the present disclosure also provide a vehicle-road coordination system which, for example, includes a roadside device and an autonomous vehicle. The autonomous vehicle may be the above-mentioned vehicle 103. The roadside device is used to send the color of the traffic light to the autonomous vehicle, and the autonomous vehicle is used to drive automatically based on the color of the traffic light.

The embodiments of the present disclosure provide a method for identifying a traffic light. The method for identifying the traffic light according to the exemplary embodiments of the present disclosure is described hereafter with reference to FIGS. 2 to 4 in conjunction with the application scene of FIG. 1.

FIG. 2 schematically shows a flowchart of a method for identifying a traffic light according to an embodiment of the present disclosure.

As shown in FIG. 2, the method 200 for identifying a traffic light according to the embodiment of the present disclosure may include, for example, operations S210 to S230.

In operation S210, a first position information of the traffic light is identified in an image to be identified.

In operation S220, a target position information is determined from at least one second position information based on a relative position relationship between the first position information and the at least one second position information, in response to the first position information indicating a position of a part of the traffic light.

In operation S230, a color of the traffic light is identified in a first image area corresponding to the target position information in the image to be identified.

Exemplarily, the second position information indicates, for example, a position of the traffic light.

Exemplarily, the traffic light is, for example, a light group including a plurality of light heads. The first position information of the traffic light in the image to be identified may be identified by using a target detection model.

Generally the first position information indicates, for example, a position of a part of the traffic light. Alternatively the first position information may indicate a position of the entire traffic light. The part of the traffic light may be, for example, some light heads of the plurality of light heads, and the entire traffic light may include, for example, all the light heads. Taking the traffic light including three light heads as an example, the three light heads are respectively a red light head, a yellow light head, and a green light head. The part of the traffic lights includes, for example, one or two of the light heads. The entire traffic light includes, for example, three light heads.

The at least one second position information is identified in other image(s) which is/are image(s) for traffic lights. The second position information indicates a position of the entire traffic light. When the first position information indicates a position of some of the light heads of the traffic light, the target position information that is close to the first position information may be determined from the at least one second position information based on the relative positional relationship between the first position information and each second position information. The target position information indicates, for example, the position of the entire traffic light.

Next, the first image area corresponding to the target position information is determined from the image to be identified. The first image area is, for example, an area for the traffic light. Then, the color of the traffic light is identified in the first image area.

In the embodiment of the present disclosure, when the identified first position information indicates the position of just a part of the traffic light, determining the image area corresponding to the first position information from the image to be identified and performing the color identification in the image area will result in poor identification performance. Therefore, in the embodiments of the present disclosure, the target position information matching the first position information is determined, the first image area corresponding to the target position information is determined from the image to be identified, and the color identification is performed in the first image area to obtain the color of the traffic light. Since the target position information indicates the position of the entire traffic light, identifying the color based on the position of the entire traffic light improves the effect of the color identification.

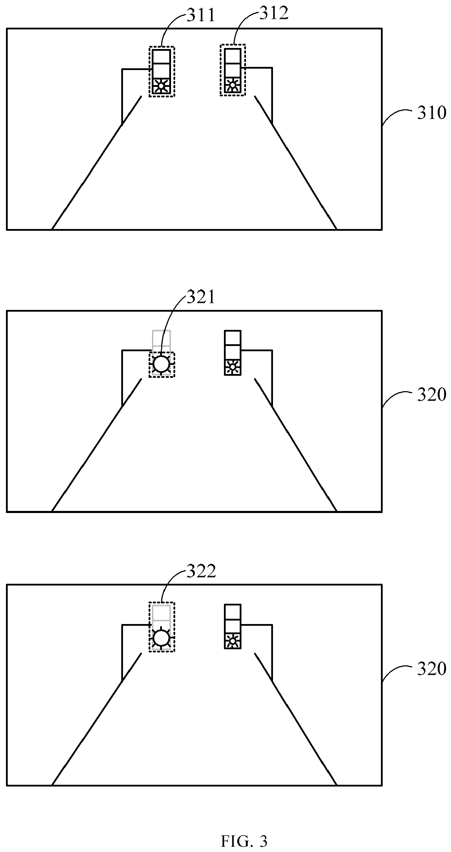

FIG. 3 schematically shows a schematic diagram of a method for identifying a traffic light according to an embodiment of the present disclosure.

As shown in FIG. 3, there is at least one traffic light at a certain intersection, and the number of the at least one traffic light is, for example, two. An image capturing device at a fixed position is used to capture images of the at least one traffic light, so as to obtain a plurality of images. Taking an image 310 as an example, at least one second position information of at least one entire traffic light in the image 310 is identified, and the at least one second position information includes, for example, a second position information 311 and a second position information 312. The at least one second position information is, for example, in a one-to-one correspondence with the at least one entire traffic light. Each second position information includes, for example, information of the entire light frame of a traffic light.

In another case, for at least one traffic light at the intersection, the same image capturing device may be used to capture an image of at least one traffic light, so as to obtain an image to be identified 320. Since the image quality of the image to be recognized 320 may be poor, a first position information 321 identified from the image to be identified 320 is, for example, only for a part of the traffic light. For example, when the image is collected at night, the quality of the image is poor and a strong halo is usually formed due to the lighting of a certain light head, so that it fails to identify the entire light frame of the traffic light. For example, when it is identified that the image 320 to be identified has a halo, the first position information 321 includes a position where the halo is located, so that the identification result does not include the information of the entire light frame of the traffic light.

If an image area in the image to be identified is determined based on the first position information 321 and a color of the traffic light is identified in the image area, the identification effect will be poor because the identification result is affected by the intensity of the halo.

Therefore, by matching the first position information 321 with each of the at least one of the second position information, the second position information 311 that is close to the first position information 321 is determined as a target position information. Then, a first image area 322 matching the target position information is determined from the image to be identified 320. Then, an image identification is performed on the first image area 322 to identify the color of the traffic light in the image to be identified 320.

Exemplarily, identifying the color of the traffic light in the first image area 322 includes the following manners.

In a first manner, the color of the traffic light may be determined based on pixel values of some of pixels in the first image area 322. The some of pixels include pixels in a lower area of the first image area 322, and the lower area includes an area where a light halo indicating a lighted light head is located. The color may be determined based on the pixel values of the area where the halo is located.

In another manner, the color of the traffic light is determined based on a distribution of the pixels in the first image area 322. For example, the distribution of the pixels in the first image area 322 indicates that the pixels corresponding to the halo are distributed in the lower area of the first image area 322. For the traffic light, the light heads of the traffic light from top to bottom are sequentially represented as a red light head, a yellow light head, and a green light head. If the lower area of the first image area 322 is a halo, it usually means that there is a lit light head in the lower area of the traffic light, and based on the distribution of the pixels in the first image area 322, it may be determined that the green light of the traffic light is currently lighted.

In another manner, the color of the traffic light may be determined based on both the pixel values of the some of pixels in the first image area 322 and the distribution of the pixels in the first image area 322, thereby improving the identification accuracy.

In the embodiments of the present disclosure, when the identified first position information indicates the position of just a part of the traffic light, the target position information matching the first position information is determined, the first image area corresponding to the target position information is determined from the image to be identified, and the color identification is performed on the first image area to obtain the identification result. In the embodiments of the present disclosure, since the relative positional relationship of the halo in the first image area is considered when performing the color identification, the effect of color identification is improved.

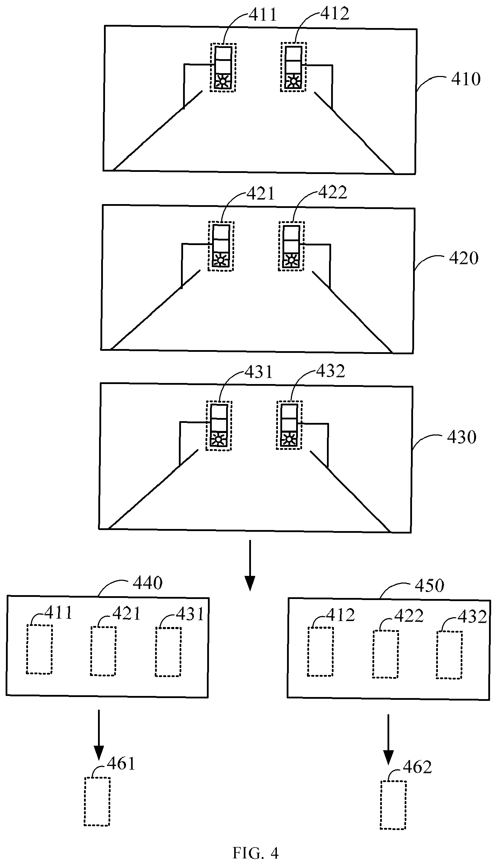

How to determine at least one second position information will be described below with reference to FIG. 4.

FIG. 4 schematically shows a schematic diagram of a method for identifying a traffic light according to another embodiment of the present disclosure.

As shown in FIG. 4, a plurality of initial images 410, 420, 430 for traffic lights are acquired and processed respectively. For example, identification is performed on each of the initial images to obtain a plurality of initial position information 411, 412, 421, 422, 431 and 432 for the traffic light. Each initial position information indicates a position of a traffic light, that is, the initial position information is for an entire light frame of a traffic light. If the number of the plurality of initial position information is less than a preset number, it may be continued to acquire initial images for identification. When the number of obtained initial position information is greater than or equal to the preset number, the following grouping operation may be performed.

Based on a relative positional relationship between the plurality of initial position information 411, 412, 421, 422, 431 and 432, the plurality of initial position information 411, 412, 421, 422, 431 and 432 are divided to obtain at least one group.

For example, the close initial position information among the plurality of initial position information is divided into the same group, thereby obtaining two groups. The first group 440 includes, for example, initial position information 411, 421 and 431, and the second group 450 includes, for example, initial position information 412, 422 and 432.

For each group in the at least one group, an average position information is obtained based on the initial position information in the group. Then, at least one average position information is determined as at least one second position information.

For example, each initial position information includes a position information of a detection frame. A center point of each detection frame is determined as a vertex of a data graph in a data structure, and a distance between a center point and a center point is determined as an edge of the data graph. When a value of an edge is less than a threshold, it is considered that two vertices connected by the edge are connected, and an initial position information corresponding to the two vertices is divided into one group.

For each group, a position information of a reference center point is calculated based on a position information of a center point of each detection frame in the group. For example, positions of center points of all detection frames in the group are averaged to obtain an average value, and the average value is determined as the position of the reference center point. Alternatively, a center point at a median numbered location is selected from the center points of all detection frames in the group and determined as the reference center point, and a position information of the center point at the median numbered location is the position information of the reference center point.

Then, a position information of an average detection frame is determined based on the position information of the reference center point and a position information of a benchmark detection frame. The benchmark detection frame is a detection frame for a traffic light determined in advance based on a benchmark image.

The benchmark detection frame including a first benchmark detection frame and a second benchmark detection frame is taken as an example. A position information of a center point of an average detection frame 461 determined for the first group 440 is a position information of a reference center point corresponding to the first group 440, and a length and a width of the average detection frame 461 are a length and a width of the first benchmark detection frame. A position information of a center point of an average detection frame 462 determined for the second group 450 is a position information of a reference center point corresponding to the second group 450, and a length and a width of the average detection frame 462 are a length and a width of the second benchmark detection frame. The length and the width of the first benchmark detection frame may be the same as or different from the length and the width of the second benchmark detection frame.

Next, the average position information may be determined based on the position information of the average detection frame. For example, a position information of each of a plurality of average detection frames is matched with the position information of the benchmark detection frame, to obtain a matching result, wherein the plurality of average detection frames correspond to the plurality of groups in one-to-one correspondence.

Exemplarily, for any one of the plurality of average detection frames 461 and 462, if the position information of the average detection frame matches the position information of any benchmark detection frame, for example, if a distance between the center of the average detection frame and the center of the benchmark detection frame is small, it indicates a match. At this time, the position information of the plurality of average detection frames 461 and 462 may be used as the average position information, and the average position information may be determined as the second position information.

Exemplarily, for any one of the plurality of average detection frames 461 and 462, if the position information of the average detection frame does not match the position information of all the benchmark detection frames, for example, if a distance between the center of the average detection frame and each of the centers of all the benchmark detection frames is large, it indicates a mismatch. The mismatch may be due to misidentification in the initial image identification. At this time, a deletion operation may be performed on the plurality of average detection frames, for example, the mismatched average detection frames are deleted, the position information of the remaining average detection frames is determined as the average position information, and the average position information is determined as the second position information. The first position information and the second position information may also be position information of the detection frame.

**In** the embodiments of the present disclosure, the average detection frame is obtained by performing identification on the plurality of initial images, and the second position information is obtained based on the average detection frame, in order to identify the color of traffic lights based on the second position information, improving the identification effect.

**In** another embodiment of the present disclosure, after the first position information for the image to be identified is identified, if the first position information indicates the position of the entire traffic light, it may be determined that the first position information is for the entire light frame, and the relative positional relationship between the first position information and the at least one second position information may be determined at this time.

For example, for any one of the at least one second position information, if a distance between a position represented by any second position information and a position represented by the first position information is less than a preset distance, it indicates that the first position information and the second position information location are matched, and the second image area corresponding to the first position information may be directly determined from the image to be identified. Then, the color of the traffic light is directly identified in the second image area. The process of identifying in the second image area is similar to the process of identifying in the first image area above, which will not be repeated here.

If the position represented by the first position information has a distance being greater than or equal to the preset distance with respect to all the positions represented by the second position information, it indicates that the first position information does not match all the second position information and it indicates that the entire light frame indicated by the first position information may be a light frame newly added later, and color identification is not performed at this time. It is continued to acquire a plurality of new images, the image identification is performed on the plurality of new images to obtain a plurality of new position information corresponding to the first position information, and the first position information and the new position information are processed to obtain a new average position information. The process of processing the first position information and the new position information is similar to the above-mentioned processing process of the plurality of initial position information in each group, which will not be repeated here. Then, the new average position information is added to at least one second position information, so as to facilitate subsequent color identification based on the updated second position information.

In the embodiments of the present disclosure, the second location information may be updated in real time, in order to identify the color based on the updated second location information, improving the accuracy of the identification.

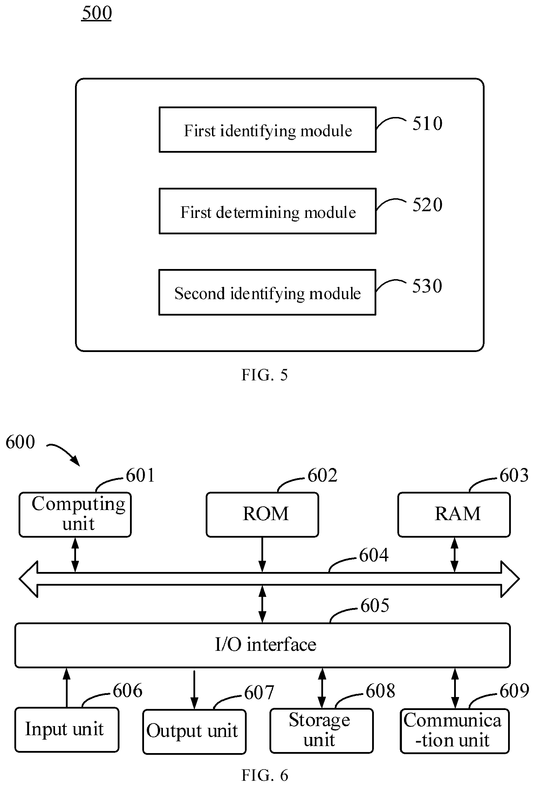

FIG. 5 schematically shows a block diagram of an apparatus for identifying a traffic light according to an embodiment of the present disclosure; and

As shown in FIG. 5, the apparatus 500 for identifying a traffic light according to the embodiment of the present disclosure includes, for example, a first identifying module 510, a first determining module 520 and a second identifying module 530.

The first identifying module 510 is configured to identify a first position information of the traffic light in an image to be identified. According to the embodiment of the present disclosure, the first identifying module 510 may, for example, perform the operation S210 described above with reference to FIG. 2, which will not be repeated here.

The first determining module 520 is configured to determine a target position information from at least one second position information based on a relative position relationship between the first position information and the at least one second position information, in response to the first position information indicating a position of a part of the traffic light, wherein the second position information indicates a position of the traffic light. According to the embodiment of the present disclosure, the first determining module 520 may, for example, perform the operation S220 described above with reference to FIG. 2, which will not be repeated here.

The second identifying module 530 is configured to identify a color of the traffic light in a first image area corresponding to the target position information in the image to be identified. According to the embodiment of the present disclosure, the second identifying module 530 may, for example, perform the operation S230 described above with reference to FIG. 2, which will not be repeated here.

According to the embodiment of the present disclosure, the apparatus 500 further includes an acquiring module, a processing module and a second determining module. The acquiring module is configured to acquire a plurality of initial images for the traffic light; the processing module is configured to process the plurality of initial images to obtain at least one average position information for the traffic light; and the second determining module is configured to determine the at least one average position information as the at least one second position information.

According to the embodiment of the present disclosure, the processing module includes an identifying sub-module, a dividing sub-module and a first determining sub-module. The identifying sub-module is configured to identify a plurality of initial position information for the traffic light from the plurality of initial images, wherein the initial position information indicates the position of the traffic light; the dividing sub-module is configured to divide the plurality of initial position information into at least one group based on a relative position relationship between the plurality of initial position information; and the first determining sub-module is configured to obtain, for each group of the at least one group, the average position information based on the initial position information in the group.

According to the embodiment of the present disclosure, the initial position information includes a position information of a detection frame, and the first determining sub-module includes a computing unit, a first determining unit and a second determining unit. The computing unit is configured to calculate a position information of a reference center point based on a position information of a center point of each detection frame in the group; the first determining unit is configured to determine a position information of an average detection frame based on the position information of the reference center point and a position information of a benchmark detection frame, wherein the benchmark detection frame is a detection frame for the traffic light determined based on a benchmark image; and the second determining unit is configured to determine the average position information based on the position information of the average detection frame.

According to the embodiment of the present disclosure, the second determining unit includes a match subunit and a deleting subunit. The match subunit is configured to match a position information of each a plurality of average detection frames with the position information of the benchmark detection frame, to obtain a matching result, wherein the plurality of average detection frames correspond to the plurality of groups in one-to-one correspondence; and the deleting subunit is configured to delete one or more of the plurality of average detection frames based on the matching result, and determine a position information of a remaining average detection frame as the average position information.

According to the embodiment of the present disclosure, the apparatus 500 further includes a third determining module, a fourth determining module and a third identifying module. The third determining module is configured to determine the relative position relationship between the first position information and the at least one second position information, in response to the first position information indicating the position of the traffic light; the fourth determining module is configured to determine a second image region corresponding to the first position information in the image to be identified, in response to a distance between a position characterized by any one of the at least one second position information and a position characterized by the first position information being less than a predetermined distance, and a third identifying module is configured to identify the color of the traffic light in the second image area.

According to the embodiment of the present disclosure, the apparatus 500 further includes a fourth identifying module, a fifth determining module and an adding module. The fourth identifying module is configured to identify a new position information in a new image, in response to the distance between the position characterized by any one of the at least one second position information and the position characterized by the first position information being greater than or equal to the predetermined distance; the fifth determining module is configured to obtain a new average position information based on the first position information and the new position information; and the adding module is configured to add the new average position information to the at least one second position information.

According to the embodiment of the present disclosure, the second identification module 530 includes at least one of a second determining sub-module or a third determining sub-module. The second determining sub-module is configured to determine the color of the traffic light based on pixel values of some of pixels in the first image area; and the third determining sub-module is configured to determine the color of the traffic light based on a distribution of the pixels in the first image area.

Collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user.

According to embodiments of the present disclosure, the present disclosure also provides an electronic device, a readable storage medium, and a computer program product.

FIG. 6 is a block diagram of an electronic device for identifying a traffic light used to implement the embodiments of the present disclosure.

FIG. 6 illustrates a schematic block diagram of an example electronic device 600 that may be used to implement embodiments of the present disclosure. The electronic device 600 is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 6, the device 600 includes a computing unit 601, which may execute various appropriate actions and processing according to a computer program stored in a read only memory (ROM) 602 or a computer program loaded from a storage unit 608 into a random access memory (RAM) 603. Various programs and data required for the operation of the device 600 may also be stored in the RAM 603. The computing unit 601, the ROM 602 and the RAM 603 are connected to each other through a bus 604. An input/output (I/O) interface 605 is also connected to the bus 604.

The I/O interface 605 is connected to a plurality of components of the device 600, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices through the computer network such as the Internet and/or various telecommunication networks.

The computing unit 601 may be various general-purpose and/or special-purpose processing components with processing and computing capabilities. Some examples of computing unit 601 include, but are not limited to, central processing unit (CPU), graphics processing unit (GPU), various dedicated artificial intelligence (AI) computing chips, various processors that run machine learning model algorithms, digital signal processing DSP and any appropriate processor, controller, microcontroller, etc. The computing unit 601 executes the various methods and processes described above, such as the method for identifying a traffic light. For example, in some embodiments, the method for identifying a traffic light may be implemented as computer software programs, which are tangibly contained in the machine-readable medium, such as the storage unit 608. In some embodiments, part or all of the computer program may be loaded and/or installed on the device 600 via the ROM 602 and/or the communication unit 609. When the computer program is loaded into the RAM 603 and executed by the computing unit 601, one or more steps of the method for identifying a traffic light described above may be executed. Alternatively, in other embodiments, the computing unit 601 may be configured to execute the method for identifying a traffic light in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

**In** the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or device, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

**In** order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned specific implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method (200) for identifying a traffic light, comprising:
identifying (S210) a first position information of the traffic light in an image to be identified;
determining (S220) a target position information from at least one second position information based on a relative position relationship between the first position information and the at least one second position information, in response to the first position information indicating a position of a part of the traffic light, wherein the second position information indicates a position of the traffic light; and
identifying (S230) a color of the traffic light in a first image area corresponding to the target position information in the image to be identified.

2. The method according to claim 1, further comprising:
acquiring (410, 420, 430) a plurality of initial images for the traffic light;
processing the plurality of initial images (410, 420, 430) to obtain at least one average position information for the traffic light; and
determining the at least one average position information as the at least one second position information.

3. The method according to claim 2, wherein the processing the plurality of initial images to obtain at least one average position information for the traffic light comprises:
identifying a plurality of initial position information (411, 412, 421, 422, 431, 432) for the traffic light from the plurality of initial images (410, 420, 430), wherein the initial position information indicates the position of the traffic light;
dividing the plurality of initial position information (411, 412, 421, 422, 431, 432) into at least one group (440, 450) based on a relative position relationship between the plurality of initial position information; and
obtaining, for each of the at least one group (440, 450), the average position information based on the initial position information in the group.

4. The method according to claim 3, wherein the initial position information comprises a position information of a detection frame; and the obtaining the average position information based on the initial position information in the group comprises:
calculating a position information of a reference center point based on a position information of a center point of each detection frame in the group,
determining a position information of an average detection frame (461, 462) based on the position information of the reference center point and a position information of a benchmark detection frame, wherein the benchmark detection frame is a detection frame for the traffic light determined based on a benchmark image; and
determining the average position information based on the position information of the average detection frame (461, 462).

5. The method according to claim 4, wherein the determining the average position information based on the position information of the average detection frame comprises:
matching a position information of each of a plurality of average detection frames (461, 462) with the position information of the benchmark detection frame, to obtain a matching result, wherein the plurality of average detection frames (461, 462) correspond to the plurality of groups in one-to-one correspondence; and
deleting one or more of the plurality of average detection frames (461, 462) based on the matching result, and determining a position information of a remaining average detection frame as the average position information.

6. The method according to any one of claims 1-5, further comprising:
determining the relative position relationship between the first position information and the at least one second position information, in response to the first position information indicating the position of the traffic light;
determining a second image region corresponding to the first position information in the image to be identified, in response to a distance between a position **characterized by** any one of the at least one second position information and a position **characterized by** the first position information being less than a predetermined distance, and
identifying the color of the traffic light in the second image area.

7. The method of claim 6, further comprising:
identifying a new position information in a new image, in response to the distance between the position **characterized by** any one of the at least one second position information and the position **characterized by** the first position information being greater than or equal to the predetermined distance;
obtaining a new average position information based on the first position information and the new position information; and
adding the new average position information to the at least one second position information.

8. The method according to any one of claims 1-7, wherein the identifying a color of the traffic light in a first image area comprises at least one of:
determining the color of the traffic light based on pixel values of some of pixels in the first image area; and
determining the color of the traffic light based on a distribution of the pixels in the first image area.

9. An apparatus (500) for identifying a traffic light, comprising:
a first identifying module (510) configured to identify a first position information of the traffic light in an image to be identified;
a first determining module (520) configured to determine a target position information from at least one second position information based on a relative position relationship between the first position information and the at least one second position information, in response to the first position information indicating a position of a part of the traffic light, wherein the second position information indicates a position of the traffic light; and
a second identifying module (530) configured to identify a color of the traffic light in a first image area corresponding to the target position information in the image to be identified.

10. An electronic device (600), comprising:
at least one processor (601); and
a memory (601)communicatively connected with the at least one processor (601);
wherein the memory (601) stores instructions executable by the at least one processor, and the instructions, when executed by the at least one processor (601), cause the at least one processor (601) to perform the method of any one of claims 1 to 8.

11. A non-transitory computer-readable storage medium storing computer instructions, wherein the computer instructions are configured to cause the computer to perform the method of any one of claims 1 to 8.

12. A computer program product comprising a computer program, wherein the computer program, when executed by a processor, implements the method of any one of claims 1 to 8.

13. A roadside device, comprising the electronic device according to claim 10.

14. A cloud control platform, comprising the electronic device according to claim 10.

15. A vehicle-road coordination system, comprising the roadside device according to claim 13 and an autonomous vehicle, wherein,
the roadside device is configured to send the color of the traffic light to the autonomous vehicle; and
the autonomous vehicle is configured to drive automatically according to the color of the traffic light.
